# EUROPEAN PATENT SPECIFICATION

(11) **EP 4 415 299 B1**
(45) Date of publication and mention of the grant of the patent: **20.05.2026**
(21) Application number: 24175784.8
(22) Date of filing: 14.01.2022
(51) Int. Cl.: H04W 72/04, H04L 1/1867, H04L 1/1607, H04L 1/1829, H04L 5/00, H04W 72/1268

(54) **COLLISION HANDLING, UPLINK CONTROL INFORMATION MULTIPLEXING AND REPETITION FOR SINGLE TRANSPORT BLOCK TRANSMISSION ON A MULTI-SLOT PHYSICAL UPLINK SHARED CHANNEL**
KOLLISIONSHANDHABUNG, MULTIPLEXING UND WIEDERHOLUNG VON UPLINK-STEUERUNGSINFORMATIONEN FÜR EINZELTRANSPORTBLOCKÜBERTRAGUNG AUF EINEM GEMEINSAM GENUTZTEN PHYSIKALISCHEN MEHRSCHLITZ-UPLINK-KANAL
GESTION DE COLLISION, MULTIPLEXAGE D'INFORMATIONS DE COMMANDE DE LIAISON MONTANTE ET RÉPÉTITION POUR UNE TRANSMISSION DE BLOC DE TRANSPORT UNIQUE SUR UN CANAL PARTAGÉ DE LIAISON MONTANTE PHYSIQUE À INTERVALLES MULTIPLES

(30) Priority: 14.01.2021 US 202163137239 P
(43) Date of publication of application: 14.08.2024
(62) Divisional of application: 22702881.8
(73) Proprietor: Telefonaktiebolaget LM Ericsson (publ), 164 83 Stockholm (SE)
(72) Inventor: SU, Ling, Beijing, 100102 (CN); ZHIPENG, Lin, Nanjing, 211100 (CN); HARRISON, Robert Mark, Grapevine, 76051 (US)
(74) Representative: LifeTech IP Spies & Behrndt Patentanwälte PartG mbB

(56) References cited:
- WO-A1-2020/066021
- WO-A1-2020/145368
- US-A1- 2021 345 306
- US-A1- 2022 159 682

## Description

### FIELD

The present disclosure relates to wireless communications, and in particular, to collision handling, uplink control channel information (UCI) multiplexing and repetition for transport block (TB) transmission on a multi-slot physical uplink shared channel (PUSCH).

### INTRODUCTION

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes, such as base stations, and mobile wireless devices (WD), as well as communication between network nodes and between WDs.

### Channel State Information (CSI) reporting in 3GPP NR Technical Release (TR) Rel-15 and Rel-16

In NR, the following types of CSI reporting are supported:
- Periodic CSI Reporting: CSI is reported periodically by the wireless device (WD). Parameters such as periodicity and slot offset are configured semi-statically, by higher layer signaling from the NR base station (gNB) to the WD.
- Aperiodic CSI Reporting (AP CSI Reporting): This type of CSI reporting involves a single-shot (i.e., one time) CSI report by the WD which is dynamically triggered by the gNB, e.g. by the DCI in PDCCH. Some of the parameters related to the configuration of the aperiodic CSI report is semi-statically configured from the gNB to the WD but the triggering is dynamic.
- Semi-Persistent CSI Reporting: similar to periodic CSI reporting, semi-persistent CSI reporting has a periodicity and slot offset which may be semi-statically configured by the gNB to the WD. However, a dynamic trigger from gNB to WD may be needed to allow the WD to begin semi-persistent CSI reporting. In some cases, a dynamic trigger from gNB to WD may be needed to command the WD to stop the semi-persistent transmission of CSI reports.

Different types of CSI reporting can be sent on different channels. As summarized in the table below, in 3GPP NR Rel-15, P-CSI is sent on the physical uplink control channel (PUCCH) and A-CSI is sent on the physical uplink shared channel (PUSCH).

| | **Periodic** | **Semi-Persistent** | **Aperiodic** |
|---|---|---|---|
| Type I WB | PUCCH Format 2, | PUCCH Format 2 | PUSCH |
| | PUCCH Format 3,4 | PUSCH | |
| Type I SB | | PUCCH Format 3 or 4 | PUSCH |
| | | PUSCH | |
| Type II WB | | PUCCH Format 3 or 4 | PUSCH |
| | | PUSCH | |
| Type II SB | | PUSCH | PUSCH |
| Type II Part 1 only | | PUCCH Format 3 or 4 (WD capability) | |

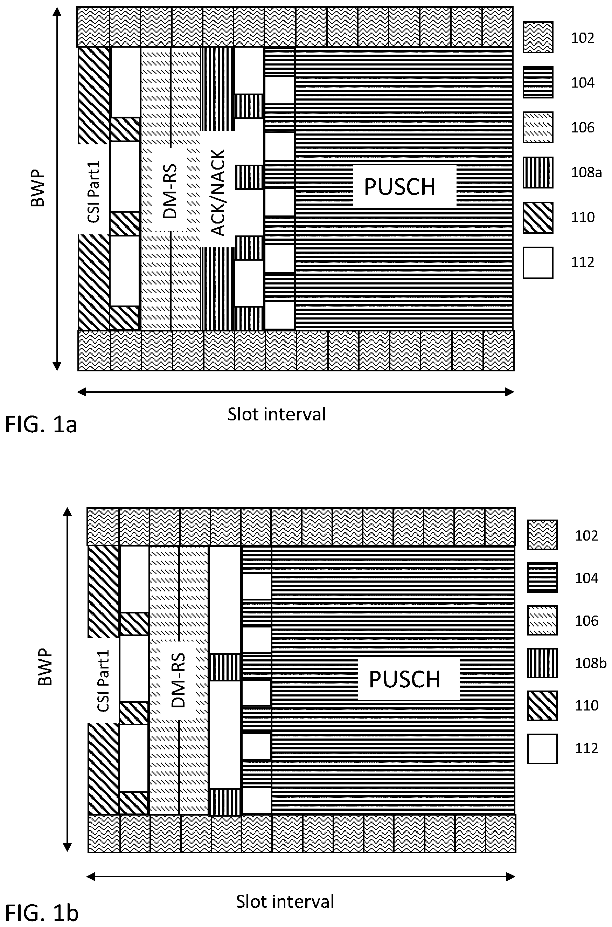

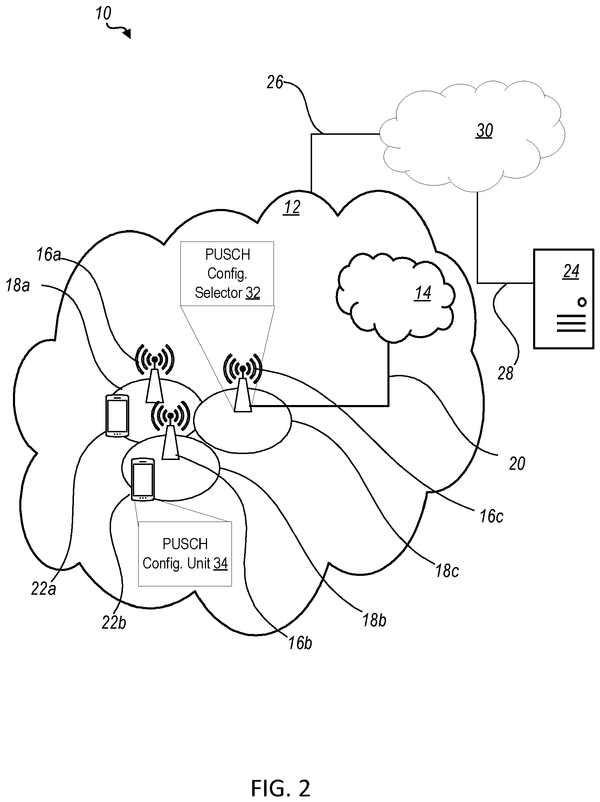

### Uplink Control information (UCI) on PUSCH (e.g., as illustrated at reference sign 104 in Figs. 1 and 2)

### Principles of UCI mapping on PUSCH (e.g., as illustrated at reference sign 104 in Figs. 1 and 2)

- CSI Part 1, e. g. as illustrated at reference sign 110 in Figs. 1 and 2:
   a) For rate matched ACK/NACK, CSI Part 1 (e.g. as illustrated at reference sign 110) is mapped from first available non-demodulation reference signal (DM-RS) symbol (e.g. wherein DM-RSs are illustrated at reference sign 106 in Figs. 1 and 2), mapping around ACK/NACK resource elements (REs) (e.g. as illustrated at reference sign 108a in Figs. 1 and 2);
   b) For punctured ACK/NACK, CSI Part 1 (e.g. as illustrated at reference sign 110) is mapped from first available non-DM-RS symbol (e.g. wherein DM-RSs are illustrated at reference sign 106 in Figs. 1 and 2), mapping around those REs reserved for ACK/NACK 108b puncturing (PUSCH 104 and CSI Part 2, e.g. shown at reference sign 112, can be mapped on reserved resources, but will eventually be punctured);
- CSI part 2, e.g., as illustrated at reference sign 112 in Figs. 1 and 2, is mapped from a first available non-DM-RS symbol, following CSI Part 1, e.g., as illustrated at reference sign 110 in Figs. 1 and 2:
   a) For punctured ACK/NACK, CSI Part 2 (e.g. shown at reference sign 112) can be mapped on resources reserved for ACK/NACK 108b (and will then be punctured by ACK/NACK);
- UCI is not frequency division multiplexed (FDM) with DM-RS 106; and
- General frequency-domain mapping procedure for all UCI types: Fill up symbol(s) completely with modulations symbols of one UCI type (if enough UCI modulation symbols are available), followed by one symbol where remaining UCI modulation symbols of this type are mapped on a comb across the PUSCH 104 bandwidth.

FIGs. 1a and 1b illustrate an example of position of UCI on the PUSCH 104. FIG. 1a shows a rate-matched ACK/NACK, e.g. for no frequency hopping, and FIG. 1b shows a punctuated ACK/NACK. A bandwidth part (BWP) may extend until an edge 102 of the BWP in the frequency domain.

### 3GPP Technical Standard (TS) 38.213 version 16.1.0

If a WD transmits a PUSCH 104 over multiple slots and the WD would transmit a PUCCH with hybrid automatic repeat request (HARQ) HARQ-ACK and/or CSI information over a single slot and in a slot that overlaps with the PUSCH transmission in one or more slots of the multiple slots, and the PUSCH transmission in the one or more slots fulfills the conditions in Clause 9.2.5 of the 3GPP TS 38.213 version 16.1.0 for multiplexing the HARQ-ACK and/or CSI information, the WD multiplexes the HARQ-ACK and/or CSI information in the PUSCH transmission in the one or more slots. The WD does not multiplex HARQ-ACK and/or CSI information in the PUSCH transmission in a slot from the multiple slots if the WD would not transmit a single-slot PUCCH with HARQ-ACK and/or CSI information in the slot in case the PUSCH transmission was absent.

### Intra-WD prioritization in 3GPP NR Rel-16

In 3GPP NR R-16, physical layer (PHY) prioritization between uplink (UL) transmissions of different PHY priority index is introduced in 3GPP to address resource conflicts between dynamic grant (DG) and configured grant (CG) PUSCH and conflicts involving multiple CGs and also to address UL data/control and control/control resource collision.

3GPP NR Rel-16 supports a two-level PHY priority index indication of:
- Scheduling Request (SR): SR configuration may have a PHY priority index indication as an RRC field in SR resource configuration;
   ∘ Note: The PHY priority index is only used to let PHY know the priority. Medium access control (MAC) will perform prioritization based on logical channel (LCH) priorities;
- HARQ-ACK: PHY priority index may be indicated in downlink (DL) downlink control information (DCI) (Format 1_1 and 1_2) for dynamic assignments by the field "Priority indicator". For semi-persistent scheduling (SPS), the PHY priority index is implicit from the PHY priority index of the HARQ-ACK codebook configured for SPS. This may be indicated by radio resource control (RRC) configuration.
- PUSCH: For DG (Dynamic Grant), the PHY priority index may be indicated in UL DCI (Format 0_1 and 0_2) and for CG the PHY priority index may be indicated by CG configuration.
- periodic and semi-persistent CSI on PUSCH: PHY priority index may be indicated in UL DCI (Format 0_1 and 0_2).

PHY priority index 0 is defined as low priority and PHY priority index 1 is defined as high priority.

In Rel-16, UCI (Uplink Control Information) is multiplexed in a PUCCH or a PUSCH only if PHY priority index of UCI and the PHY priority index of PUCCH or PUSCH is the same. Different priority multiplexing is expected to be supported in 3GPP NR Rel-17.

The 3GPP NR Rel-16 intra-UE PHY prioritization first resolves time-overlapping for PUCCH and/or PUSCH transmissions for same low priority, then time-overlapping between priorities is resolved, where the lower-priority PUCCH/PUSCH is not transmitted if it is time-overlapping with a higher-priority PUCCH/PUSCH transmission. Here it should be emphasized that the WD does not resolve time-overlapping for PUCCH/PUSCH transmissions of high-priority before resolving time-overlapping between priorities. This means that the WD will cancel a low-priority PUCCH/PUSCH transmission that time-overlaps with a high-priority PUCCH but not with a high-priority PUSCH that time-overlaps with the high-priority PUCCH, although the high-priority PUCCH will not be sent since UCI would be multiplexed on the high-priority PUSCH.

### PUSCH repetition in NR Rel-15 and Rel-16

### NR Rel-15

Slot aggregation for PUSCH is supported in 3GPP Release 15 (Rel-15) and renamed to PUSCH Repetition Type A in 3GPP NR Rel-16. The name PUSCH repetition Type A is used even if there is only a single repetition, i.e., no slot aggregation. In 3GPP Rel. 15, a PUSCH transmission that overlaps with DL symbols is not transmitted.
- For DCI granted multi-slot (for repetition) transmission (PDSCH/PUSCH) vs semi-static DL/UL assignment:
   a) If semi-static DL/UL assignment configuration of a slot has no direction confliction with scheduled PDSCH/PUSCH assigned symbols, the PDSCH/PUSCH in that slot is received/transmitted; and/or
   b) If semi-static DL/UL assignment configuration of a slot has direction confliction with scheduled PDSCH/PUSCH assigned symbols, the PDSCH/PUSCH transmission in that slot is not received/transmitted, i.e. the effective number of repetitions reduces.

In 3GPP Rel. 15, the number of repetitions is semi-statically configured by RRC parameter pusch-AggregationFactor. At most 8 repetitions are supported.

| | |
|---|---|
| pusch-AggregationFactor | ENUMERATED { n2, n4, n8 } |

### NR Rel-16

A new repetition format PUSCH repetition Type B is supported in 3GPP NR Rel-16, which PUSCH repetition allows back-to-back repetition of PUSCH transmissions. The biggest difference between the two types is that repetition Type A only allows a single repetition in each slot, with each repetition occupying the same symbols. Using this format with a PUSCH length shorter than 14 introduces gaps between repetitions, increasing the overall latency. The other change compared to 3GPP Rel. 15 is how the number of repetitions is signaled. In 3GPP Rel. 15, the number of repetitions is semi-statically configured, while in 3GPP NR Rel. 16 the number of repetitions can be indicated dynamically in DCI. This applies both to dynamic grants and configured grants type 2.

In 3GPP NR Rel-16, invalid symbols for PUSCH repetition Type B include reserved UL resources. The invalid symbol pattern indicator field is configured in the scheduling DCI. Segmentation occurs around symbols that are indicated as DL by the semi-static TDD pattern and invalid symbols.

In 3GPP NR Rel-15 and 16, TB size is determined by RE resources with a number of physical resource block (PRBs) and a number of no more than 14 orthogonal frequency division multiplexed (OFDM) symbols, i.e., no more than a slot in time domain. To reach a certain UL data rate, usually multiple PRBs in a slot are allocated for a TB transmission.

However increasing resources in the frequency domain will make a lower power density of the signals transmitted on each OFDM symbol, thus making the channel estimation accuracy worse, given the limitation of the total power the WD can have. So, the option to improve the performance of a PUSCH transmission is to increase resources in the time domain.

Furthermore, on top of an increase in time domain resources, to reduce the overhead of cyclic redundancy code (CRC) and reduce the coding rate, the transport block size (TBS) of a PUSCH transmission can be determined according to multiple slots, and different versions of encoded samples can be mapped to different slots for the PUSCH transmission across the multiple slots.

To support this kind of multiple slot transmission of a TB determined by multiple slots, the following issues exist:
- Overlapping between multi-slot PUSCH and PUSCH(s)/PUCCH(s);
- Multiplexing UCI on PUSCH of multi-slot TB; and
- Combination of multiple slot TB transmission and the PUSCH repetition.

The US patent application US2022/159682 A1 (English version of WO2020/145368 A1) discloses a terminal apparatus that includes a reception circuitry configured to receive a DCI format, and a transmission circuitry configured to repeatedly transmit, on a PUSCH, a transport block scheduled by the DCI format, wherein a first number of repetition transmissions, a second number for a symbol number of a start symbol, and a third number of consecutive symbols are given based on the DCI format, and the number of slots used for repetition transmission of the transport block is determined based on the first number, the second number, the third number, and the number of symbols per slot.

The US patent application US20210345306A1(English version of WO2020/066021A1) discloses a user terminal to appropriately control repetition transmission using one or more transmission/reception points. The user terminal includes a control section that determines a given condition applied to each repetition of repetition transmission based on a set of transmission parameters configured for each repetition and information included in downlink control information instructing the repetition transmission; and a receiving section that receives a downlink shared channel repeatedly transmitted from one or more transmission/reception points based on the given condition.

### SUMMARY

Some embodiments advantageously provide methods, systems, and apparatuses for collision handling, uplink control channel information (UCI) multiplexing and repetition for transport block (TB) transmission on a multi-slot physical uplink shared channel (PUSCH).

A collision may happen when PUSCH overlaps in time with another PUSCH and/or PUCCH. Embodiments may solve the collision (e.g., rather than avoiding the collision) by either UCI multiplexing on PUSCH or UE dropping one channel according to a collision handling rule, e.g., as described herein.

The multi-slot PUSCH may relate to a single transport block (TB) transmission or may be treated as multi-slot PUSCHs or a multi-slot PUSCH over multiple slots of the single TB transmission. These cases may also be referred to as TB over multiple slots or TB processing over multiple slots (each of which may be abbreviated by TBoMS). Alternatively or in addition, multi-slot TB may relate to the multi-slot PUSCH of the single TB transmission.
Optionally, a transport block size (TBS) of the TB transmission may be determined based on the number of allocated REs in the multiple slots of a single multi-slot PUSCH.

Some embodiments include methods for a TB process over multiple slots, including embodiments that address:
- Overlapping between multi-slot PUSCH and PUSCH(s)/PUCCH(s);
- Multiplexing UCI on PUSCH of multi-slot TB; and/or
- Combination of multiple slot TB transmission and the PUSCH repetition.

Some methods enable robust multi-slot PUSCH transmission and quick UCI transmission on multi-slot PUSCH (instead of waiting for another PUCCH opportunity or a rescheduled PUCCH). Some method embodiments include prioritizing PUSCH transmission when channel collision occurs.

Some methods support multi-slot PUSCH repetition, UCI on multi-slot PUSCH, and collision handling when multi-slot PUSCH overlaps with other channels while single TB transmission is applied on the multi-slot PUSCH. Some methods enable robust multi-slot PUSCH transmission, quick UCI transmission on multi-slot PUSCH instead of waiting for another PUCCH opportunity or a rescheduled PUCCH, and prioritized PUSCH transmission when channel collision occurs.

As to a first method aspect, a method implemented in a network node is provided. The method comprised configuring a wireless device, WD, to transmit repetitions of a multi-slot transport block, multi-slot TB, wherein a transport block size of a single TB is across multiple slots, one multi-slot TB among the repetitions uses only one redundancy version, RV, and redundancy version cycling, RV cycling, is applied among the repetitions of the multi-slot TB.

The four repetitions of the multi-slot TB may use redundancy versions RV0, RV2, RV1, RV3, respectively.

The configuring of the repetitions of the multi-slot TB may comprise repetition Type A, optionally repetition Type A only allows a single repetition in each slot, with each repetition occupying the same symbols.

Alternatively, or in addition the configuring of the repetitions of the multi-slot TB may comprise repetition Type B, wherein one transmission of the multi-slot TB is treated as one nominal repetition for both repetition Type A and repetition Type B.

The network node may be configured to communicate with the WD, and configuring of the repetitions of the transmission of the multi-slot TB may comprise transmitting a radio resource control, RRC, message or a downlink control information, DCI, message to the WD.

Alternatively, or in addition the WD may be further configured to transmit repetitions of a physical uplink shared channel, PUSCH, and Type-A multi-slot TB and PUSCH repetition Type A are configured simultaneously.

The PUSCH repetition and multi-slot TB transmission may be configured simultaneously for the same TB.

As to the second method aspect, a method implemented in a wireless device is provided. The method comprised transmitting repetitions of a multi-slot transport block, multi-slot TB, wherein a transport block size of a single TB is across multiple slots, one multi-slot TB among the repetitions uses only one redundancy version, RV, and redundancy version cycling, RV cycling, is applied among the repetitions of the multi-slot TB.

The four repetitions of the multi-slot TB may use redundancy versions RV0, RV2, RV1, RV3, respectively.

Alternatively, or in addition, the repetitions of the multi-slot TB may comprise repetition Type A, optionally repetition Type A only allows a single repetition in each slot, with each repetition occupying the same symbols; or the configuring of the repetitions of the multi-slot TB comprises repetition Type B, optionally one transmission of the multi-slot TB is treated as one nominal repetition for both repetition Type A and repetition Type B.

The network node may be configured to communicate with the WD, and the WD may be configured for the transmitting of the repetitions of the multi-slot TB by receiving a radio resource control, RRC, message or a downlink control information, DCI, message from the network node.

The WD may be further configured to transmit repetitions of a physical uplink shared channel, PUSCH; and/or Type-A multi-slot TB and PUSCH repetition Type A may be configured simultaneously; and/or the PUSCH repetition and multi-slot TB transmission may be configured simultaneously for the same TB.

As to network node aspect, a network node is configured to communicate with a wireless device is provided. The network node is configured to configure a wireless device, WD, to transmit repetitions of a multi-slot transport block, multi-slot TB, wherein a transport block size of a single TB is across multiple slots.

The first network node aspect may further comprise one multi-slot TB among the repetitions uses only one redundancy version, RV, and redundancy version cycling, RV cycling, is applied among the repetitions of the multi-slot TB.

Alternatively, or in addition, the network node may be further configured to perform the any of the steps of the first method aspect.

The wireless device aspect is provided. The wireless device WD, is configured to communicate with a network nod to transmit repetitions of a multi-slot transport block, multi-slot TB, wherein a transport block size of a single TB is across multiple slots, and one multi-slot TB among the repetitions uses only one redundancy version, RV, and wherein redundancy version cycling, RV cycling, is applied among the repetitions of the multi-slot TB.

Alternatively, or in addition, the wireless device may be further configured to perform the any of the steps of the second method aspect.
The multi-slot PUSCH may be configured by overlapping a transmission of a multi-slot PUSCH with a transmission of at least one of another PUSCH and a PUCCH.

The multi-slot PUSCH may relate to a single transport block (TB) transmission (or may be treated as multi-slot PUSCHs over multiple slots of the single TB transmission).

A transport block size (TBS) of the single TB may be determined for a TB across multiple slots.

Alternatively or in addition, the TBS of the single TB may be determined based on the number of allocated REs in the multiple slots of a single multi-slot PUSCH.

The configuring may be for, or according to, at least one of the following overlap cases (e.g., wherein the first-mentioned channel may be the multi-slot PUSCH related to the single TB and the second-mentioned channel may overlap with the multi-slot PUSCH):
- multi-slot PUSCH and multi-slot PUSCH;
- multi-slot PUSCH and one-slot PUSCH;
- multi-slot PUSCH and multi-slot PUSCH repetition;
- multi-slot PUSCH and one-slot PUSCH repetition;
- multi-slot PUSCH and PUSCH repetition;
- multi-slot PUSCH and PUCCH in one slot; and
- multi-slot PUSCH and PUCCH repetition.

The one-slot PUSCH may also be referred to as a single-slot PUSCH. Alternatively or in addition, the one-slot PUSCH repetition may also be referred to as a single-slot PUSCH repetition.

In at least one of the overlap cases, one-slot PUSCH or multi-slot transport block (TB) may be at least partially postponed. Alternatively or in addition, in at least one of the overlap cases, one-slot PUSCH or the multi-slot PUSCH may be at least partially omitted.

The omitting and/or postponing may be based at least in part on a priority of a channel.

The multi-slot PUSCH may overlap with a PUCCH repetition. The multi-slot PUSCH or the PUCCH repetition may be omitted or postponed, if the PUCCH repetition does not map on the multi-slot PUSCH. For example, at least one slot of the multi-slot PUSCH or the PUCCH repetition may be omitted or postponed, if the PUCCH repetition does not map on the multi-slot PUSCH. If the PUCCH repetition does not map on the multi-slot PUSCH may mean that uplink control information (UCI) is not multiplexed on the multi-slot PUSCH.

Alternatively or in addition, a transmission in all slots of the TB or multi-slot PUSCH is omitted or only a transmission in the one or more overlapping slots of multiple slots of the TB or multi-slot PUSCH may be omitted or postponed. For example, at least the transmission of multi-slot PUSCH or PUCCH repetition in the one or more overlapping slots may be omitted or postponed.

A repetition may be used for the multi-slot TB or the multi-slot PUSCH. Optionally, if one multi-slot TB or one multi-slot PUSCH uses only one redundancy version (RV), RV cycling may be applied among the repetitions.

Alternatively or in addition, the multi-slot TB (e.g., the multi-slot PUSCH) may be repeated. A Type-A multi-slot TB and a PUSCH repetition Type A may be configured simultaneously and/or in combination.

As to a second method aspect, a method implemented in a network node is provided. The method comprises a step of configuring the WD to transmit on a multi-slot physical uplink shared channel (PUSCH) by overlapping a multi-slot PUSCH with at least one of another PUSCH and a physical uplink control channel (PUCCH).

The second method aspect may further comprise any feature or step disclosed in the context of the first method aspect and/or a feature or a step corresponding thereto.

As to a first device aspect, a wireless device (WD) configured to communicate with a network node is provided. The WD is configured to configure a multi-slot physical uplink shared channel (PUSCH) by overlapping a multi-slot PUSCH with at least one of another PUSCH and a physical uplink control channel (PUCCH).

The first device aspect may further comprise any feature or step disclosed in the context of the first method aspect. For example, the WD may be further configured to perform any of the steps of the first method aspect.

As to another first device aspect, a WD configured to communicate with a network node is provided. The WD comprises a radio interface and/or processing circuitry configured to configure a PUSCH by overlapping a multi-slot PUSCH with at least one of another PUSCH and a PUCCH.

The other first device aspect may further comprise any feature or step disclosed in the context of the first method aspect. For example, the processing circuitry may be further configured to perform any of the steps of the first method aspect.

As to a second device aspect, a network node configured to communicate with a wireless device (WD) is provided. The network node is configured to configure the WD to transmit on a multi-slot physical uplink shared channel (PUSCH) by overlapping a multi-slot PUSCH with at least one of another PUSCH and a physical uplink control channel (PUCCH).

The network node may comprise any feature or step disclosed in the context of the second method aspect. For example, the network node may be further configured to perform any one of the steps of the second method aspect.

As to another second device aspect, a network node configured to communicate with a wireless device (WD) is provided. The network node comprises a radio interface and/or processing circuitry configured to configure the WD to transmit on a multi-slot physical uplink shared channel (PUSCH) by overlapping a multi-slot PUSCH with at least one of another PUSCH and a physical uplink control channel (PUCCH).

The network node may comprise any feature or step disclosed in the context of the second method aspect. For example, the processing circuitry may be further configured to perform any one of the steps of the second method aspect.
As to one or more further aspect, a method implemented in a wireless device (WD) and/or a method implemented in a network node (NN) is provided. A transmission of a multi-slot TB transmission (i.e., a multi-slot TB transmission) may be repeated. Alternatively or in addition, at least one or each of the WD and/or the NN may perform physical uplink shared channel (PUSCH) repetition and multi-slot TB transmission, e.g., as methods to improve PUSCH coverage. The PUSCH repetition and multi-slot TB transmission may be configured simultaneously for the same TB. For example, a Type-A multi-slot TB may be configured with PUSCH repetition Type A. Alternatively or in addition, a Type-B multi-slot TB may be configured with PUSCH repetition Type B.

In one embodiment of the further aspect, a multi-slot TB transmission may be treated as one nominal repetition for both PUSCH repetition Type A and Type B.
In another embodiment of the further aspect, one or more of below combinations of multi-slot TB and PUSCH repetition may be applied:
- Type-A multi-slot TB may be combined with PUSCH repetition Type A; and
- Type-B multi-slot TB may be combined with PUSCH repetition Type B.

In another embodiment of the further aspect, if repetition is used for multi-slot TBs, one or more methods can be configured by radio resource control (RRC) signaling and/or downlink control information (DCI).

In another embodiment of the further aspect, if one multi-slot TB uses only one redundancy version (RV), RV cycling may be applied among repetitions. For example, four repetitions of the multi-slot TB may use RV0, RV2, RV1, and RV3, respectively.

Alternatively or in addition, if a TB uses different RVs for its multiple code blocks (CBs),
- RV cycling may be applied across all CBs of the multi-slot TB repetitions; or
- RV cycling may be applied across all CB of one multi-slot TB repetition.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIGs. 1a and 1b illustrate an example of a position of UCI on a PUSCH;
FIG. 2 is a schematic diagram of an exemplary network architecture illustrating a communication system connected via an intermediate network to a host computer according to the principles in the present disclosure;
FIG. 3 is a block diagram of a host computer communicating via a network node with a wireless device over an at least partially wireless connection according to some embodiments of the present disclosure;
FIG. 4 is a flowchart illustrating exemplary methods implemented in a communication system including a host computer, a network node and a wireless device for executing a client application at a wireless device according to some embodiments of the present disclosure;
FIG. 5 is a flowchart illustrating exemplary methods implemented in a communication system including a host computer, a network node and a wireless device for receiving user data at a wireless device according to some embodiments of the present disclosure;
FIG. 6 is a flowchart illustrating exemplary methods implemented in a communication system including a host computer, a network node and a wireless device for receiving user data from the wireless device at a host computer according to some embodiments of the present disclosure;
FIG. 7 is a flowchart illustrating exemplary methods implemented in a communication system including a host computer, a network node and a wireless device for receiving user data at a host computer according to some embodiments of the present disclosure;
FIG. 8 is a flowchart of an exemplary process in a network node for collision handling, uplink control channel information (UCI) multiplexing and repetition for transport block (TB) transmission on a multi-slot physical uplink shared channel (PUSCH);
FIG. 9 is a flowchart of an exemplary process in a wireless device for collision handling, uplink control channel information (UCI) multiplexing and repetition for transport block (TB) transmission on a multi-slot physical uplink shared channel (PUSCH); and
FIG. 10 is an illustration of partially or wholly postponing or omitting one of two channels according to principles disclosed herein.

### DETAILED DESCRIPTION

Before describing in detail exemplary embodiments, it is noted that the embodiments reside primarily in combinations of apparatus components and processing steps related to collision handling, uplink control channel information (UCI) multiplexing and repetition for transport block (TB) transmission on a multi-slot physical uplink shared channel (PUSCH). Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments provide collision handling, uplink control channel information (UCI) multiplexing and repetition for transport block (TB) transmission on a multi-slot physical uplink shared channel (PUSCH).

PUSCH coverage was identified as an example of a coverage bottleneck. Single transport block (TB) transmission over multiple slots was proposed as a candidate solution of coverage enhancement of PUSCH. In 3GPP NR Rel-15/16, one UL TB is confined to the UL symbols in a slot.

The term "multi-slot TB" or "multi-slot PUSCH" or "multi-slot TB PUSCH" as used herein, means single TB transmission on a PUSCH over multiple slots. This does not preclude that the multi-slot PUSCH can also be treated as multiple PUSCHs over the multiple slots for single TB transmission.

Some embodiments may include mechanisms of TB across multiple slots and related signaling, for example time domain resource allocation. Some embodiments may include mechanisms of TB size determination for a TB across multiple slots, CB segmentation and RV.

Some embodiments include methods for handling the overlapping between multi-slot PUSCH and PUSCH(s)/PUCCH(s), multiplexing UCI on multi-slot PUSCH and interaction with PUSCH repetition.

The overlapping may be interpreted as (e.g., the transmission or the processing of) the multi-slot PUSCH extending in time over (e.g., the transmission or the processing of) the other PUSCH or the PUCCH. Alternatively or in addition, the multi-slot PUSCH may be interrupted as a result of the omitting or the postponing the transmission in overlapping slots.

Returning to the drawing figures, in which like elements are referred to by like reference numerals, there is shown in FIG. 2 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 1 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include a PUSCH configuration selector 32 which is configured to configure a WD to transmit on a multi-slot PUSCH according to at least one of a plurality of overlap cases. A wireless device 22 is configured to include a PUSCH Configuration unit 34 which is configured to configure a multi-slot PUSCH by overlapping a multi-slot PUSCH with at least one other PUSCH and/or a PUCCH.

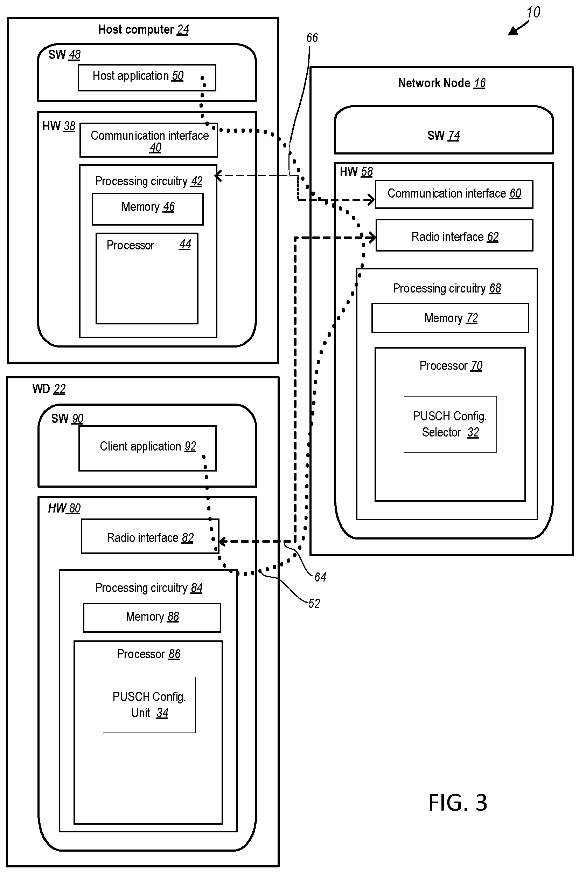

Example implementations, in accordance with an embodiment, of the WD 22, network node 16 and host computer 24 discussed in the preceding paragraphs will now be described with reference to FIG. 3. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include PUSCH configuration selector 32 which is configured to configure a WD to transmit on a multi-slot PUSCH according to at least one of a plurality of overlap cases.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include PUSCH Configuration unit 34 which is configured to configure a multi-slot PUSCH by overlapping a multi-slot PUSCH with at least one other PUSCH and/or a PUCCH.

In some embodiments, the inner workings of the network node 16, WD 22, and host computer 24 may be as shown in FIG. 2 and independently, the surrounding network topology may be that of FIG. 1.

In FIG. 2, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors, etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 2 and 3 show various "units" such as the PUSCH configuration selector 32, and the PUSCH configuration unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

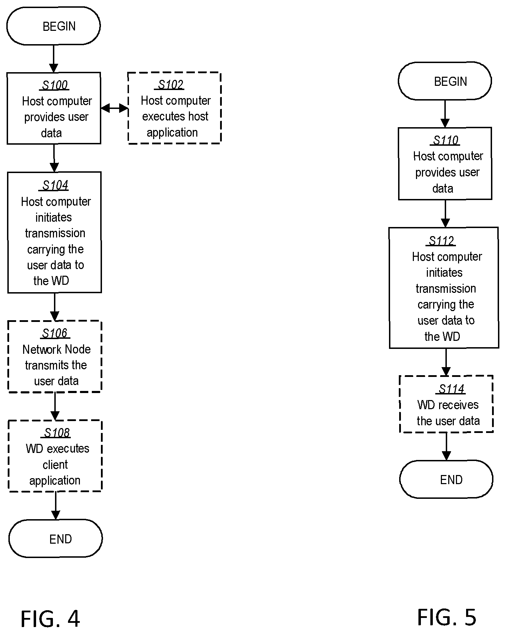

FIG. 4 is a flowchart illustrating an exemplary method implemented in a communication system, such as, for example, the communication system of FIGS. 2 and 3, in accordance with one embodiment. The communication system may include a host computer 24, a network node 16 and a WD 22, which may be those described with reference to FIG. 3. In a first step of the method, the host computer 24 provides user data (Block S100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 5 is a flowchart illustrating an exemplary method implemented in a communication system, such as, for example, the communication system of FIG. 2, in accordance with one embodiment. The communication system may include a host computer 24, a network node 16 and a WD 22, which may be those described with reference to FIGS. 2 and 3. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

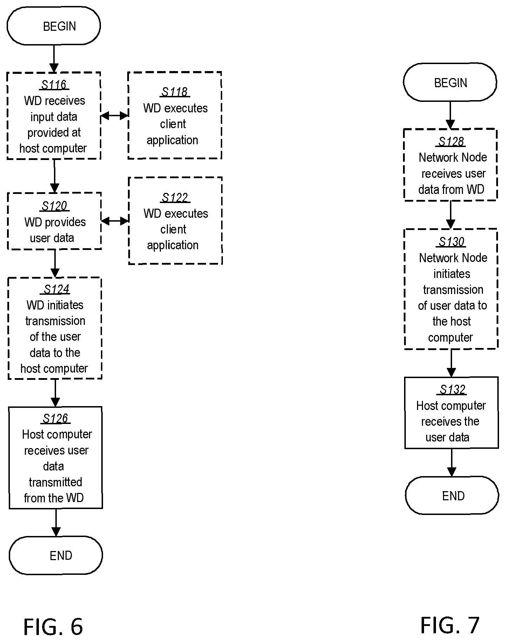

FIG. 6 is a flowchart illustrating an exemplary method implemented in a communication system, such as, for example, the communication system of FIG. 2, in accordance with one embodiment. The communication system may include a host computer 24, a network node 16 and a WD 22, which may be those described with reference to FIGS. 2 and 3. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 7 is a flowchart illustrating an exemplary method implemented in a communication system, such as, for example, the communication system of FIG. 2, in accordance with one embodiment. The communication system may include a host computer 24, a network node 16 and a WD 22, which may be those described with reference to FIGS. 2 and 3. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

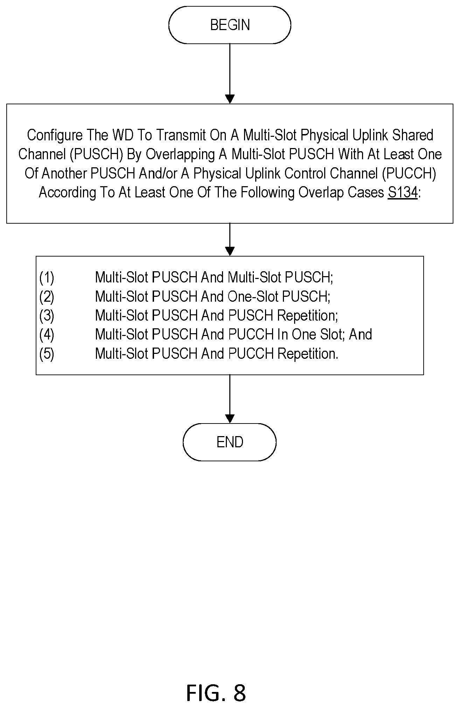

FIG. 8 is a flowchart of an exemplary process in a network node 16 for collision handling, uplink control channel information (UCI) multiplexing and repetition for transport block (TB) transmission on a multi-slot physical uplink shared channel (PUSCH). One or more blocks described herein may be performed by one or more elements of network node 16 such as by one or more of processing circuitry 68 (including the PUSCH configuration selector 32), processor 70, radio interface 62 and/or communication interface 60. Network node 16 such as via processing circuitry 68 and/or processor 70 and/or radio interface 62 and/or communication interface 60 is configured to configure the WD to transmit on a multi-slot physical uplink shared channel (PUSCH) by overlapping a multi-slot PUSCH with at least one of another PUSCH and/or a physical uplink control channel (PUCCH) according to at least one of the following overlap cases (Block S134):
(1) multi-slot PUSCH and multi-slot PUSCH;
(2) multi-slot PUSCH and one-slot PUSCH;
(3) multi-slot PUSCH and PUSCH repetition;
(4) multi-slot PUSCH and PUCCH in one slot; and
(5) multi-slot PUSCH and PUCCH repetition.

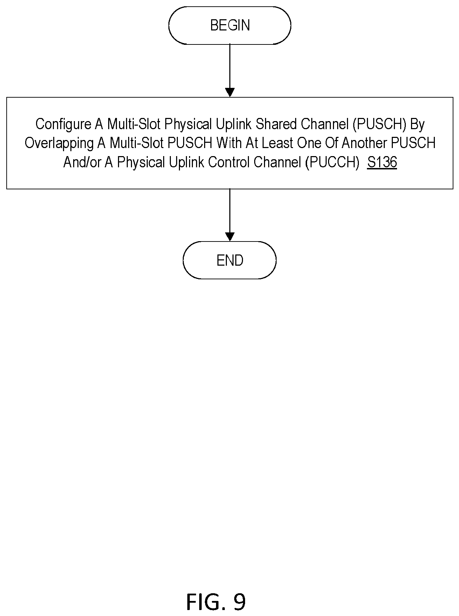

FIG. 9 is a flowchart of an exemplary process in a wireless device 22 according to some embodiments of the present disclosure. One or more blocks described herein may be performed by one or more elements of wireless device 22 such as by one or more of processing circuitry 84 (including the PUSCH configuration unit 34), processor 86, radio interface 82 and/or communication interface 60. Wireless device 22 such as via processing circuitry 84 and/or processor 86 and/or radio interface 82 is configured to configure a multi-slot physical uplink shared channel (PUSCH) by overlapping a multi-slot PUSCH with at least one of another PUSCH and/or a physical uplink control channel (PUCCH) (Block S136).

Having described the general process flow of arrangements of the disclosure and having provided examples of hardware and software arrangements for implementing the processes and functions of the disclosure, the sections below provide details and examples of arrangements for collision handling, uplink control channel information (UCI) multiplexing and repetition for transport block (TB) transmission on a multi-slot physical uplink shared channel (PUSCH).

### Overlapping between PUSCH for multi-slot TB and other PUSCH(s)

In 3GPP Rel-15/16, the WD 22 may be configured and/or scheduled with PUCCH(s) and/or PUSCH(s) in one slot. The overlapping is more likely to happen with the introduction of TB over multiple slots. The possible overlapping cases include multi-slot PUSCH vs. multi-slot PUSCH, multi-slot PUSCH vs. one-slot PUSCH, multi-slot PUSCH vs. PUSCH repetition, multi-slot PUSCH vs. PUCCH in one slot, multi-slot PUSCH vs. PUCCH repetition. Some cases have overlapping in only one slot and others in multiple slots. If not specified, overlapping may be assumed to be partially or fully overlapping, in some embodiments.

### Multi-slot PUSCH overlapping one-slot PUSCH

**Embodiment 1:** if multi-slot PUSCH overlaps at least partially with one-slot PUSCH, one or more methods can be RRC/DCI configured or predetermined.
- One-slot PUSCH or multi-slot TB is postponed.
   a) If a multi-slot TB is postponed, it can be arranged so either:
      i) transmission in all slots of the TB is postponed;
      ii) transmission in the slots starting from the overlapping slot is postponed, namely the WD 22 sends as scheduled in the slots before the overlapping slot;
      iii) transmission in the slots starting from the first CBG of multi-slot TB, which includes the overlapping slot, is postponed. Namely the WD 22 sends as scheduled in the CBG before the overlapping slot.
   b) Which multi-slot TB is postponed and how it is postponed can be based on multiple factors, including but not limited to:
      i) physical layer priority;
      ii) which one is scheduled first;
      iii) which one is scheduled to be transmitted first;
      iv) the position of overlapping slot among all slots of the TB; and/or
      v) For example, if one-slot PUSCH is scheduled in one of the beginning slots of the TB, it can be sent at first. If close to the end of multi-slot TB, it is postponed. If in the middle of multi-slot TB, one-slot PUSCH is sent as scheduled and the multi-slot TB starting from the overlapping slot is postponed.
- One-slot PUSCH or multi-slot PUSCH can be omitted:
   a) If a multi-slot TB is omitted, then;
      i) transmission in all slots of the TB is omitted;
      ii) only transmission in the overlapping slot of multiple slots of the TB is omitted; or
      iii) only transmission in the slots of a CBG of multi-slot TB including the overlapping slot is omitted.

### Multi-slot PUSCH overlapping multi-slot PUSCH

**Embodiment 2:** if multi-slot PUSCH overlaps multi-slot PUSCH in one or more slots, one or more methods can be RRC/DCI configured or predetermined.

All methods in Embodiment 1 can be reused, with a difference being that there can be more than one overlapping slot.

Besides the factors mentioned above in Embodiment 1, another factor affecting the decision as to which one to be omitted/postponed can be the number of slots for each multi-slot TB. The two overlapping multi-slot TBs may have different numbers of slots. Thus, the omission/postponing has larger impact on the multi-slot TB with the smaller number of slots, which can be prioritized.

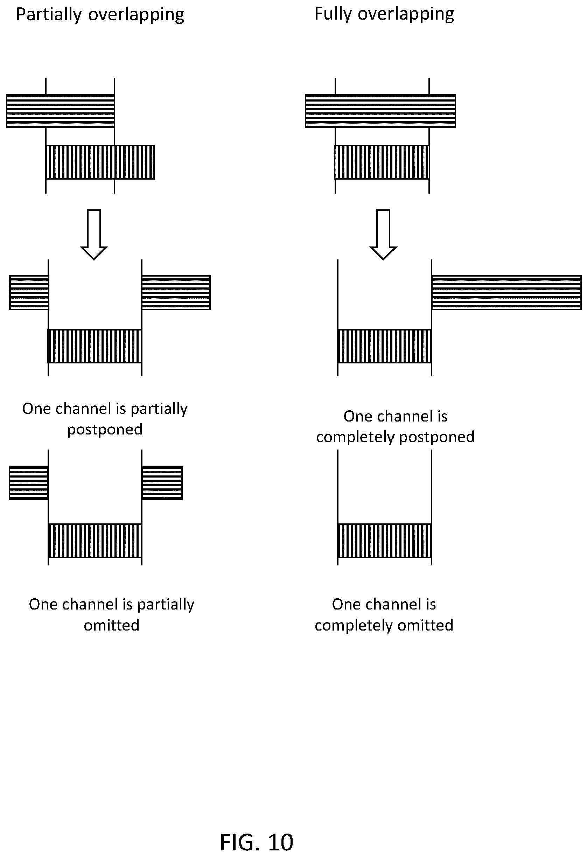

FIG. 10 illustrates example of overlapping cases. Two channels are shown on the upper left that are partially overlapping in time; the upper channel leading the lower channel. Two channels are shown overlapping in the upper right. In the middle-left, the upper channel is partially postponed during a time when the lower channel is transmitted. In the lower-left, the upper channel is partially omitted during a time when the lower channel is transmitted. The middle-right and lower-right show the upper channel being completely postponed during a time when the lower channel is transmitted, and the upper channel being completely omitted. The methods for partial and complete postponement and for partial and complete omission may share some or all of the same steps.

### Multi-slot PUSCH overlapping PUSCH repetition

**Embodiment 3:** if multi-slot PUSCH overlaps PUSCH repetition in one or more slots, one or more methods can be RRC/DCI configured or predetermined.

It is noted that all methods in one or more of Embodiments 1 and 2 described above can be reused.

If all factors are equal to both sides, another affecting factor is the number of PUSCH repetitions. If the number is large enough, PUSCH repetitions can have lower priority.

### Overlapping between multi-slot PUSCH and PUCCH(s)

### Multi-slot PUSCH overlapping PUCCH

In 3GPP NR Rel-15/16, UCI includes SR, HARQ-ACK and CSI report. The WD 22 can be configured with PUCCH resources for UCI. It is worth noting that different types of CSI reporting may be sent on different channels. An aperiodic CSI report is sent on PUSCH, a periodic CSI report is sent on PUCCH; semi persistent CSI report can be sent on PUCCH or PUSCH depending on the configuration of WB/SB and CSI report Type I/II. Therefore, SR, HARQ-ACK, P-CSI, and SP-CSI of some configurations can be configured with PUCCH resources.

In 3GPP NR Rel-15/16, time overlapping PUCCH and PUSCH transmission is not supported. If there is any overlapping PUCCH and PUSCH resources, UCI is multiplexed on the PUSCH if a timeline check passes. In 3GPP NR Rel-16, physical layer priority has been introduced and the physical channel with lower priority may be omitted if it has time resources that overlap the time resources of another physical channel..

A timeline check may be needed for UCI mapping on PUSCH. If the WD 22 is scheduled to send UCI in a particular slot, the WD 22 maps UCI to the scheduled PUSCH symbols in the slot according to a UCI RE mapping rule. It means the UCI may be advanced by several symbols to match scheduled PUSCH resources in the slot. A timeline check passes if UCI mapping on PUSCH resources in a slot meets the requirement of WD 22 PDSCH processing time and/or WD 22 CSI computation time.

Besides the overlapping PUCCH and PUSCH, there are another two cases when UCI is multiplexed on PUSCH. One case involves an A-CSI report, which can only be transmitted on the PUSCH. Another case is the WD 22 being only configured with PUSCH with HARQ-ACK multiplexed on the PUSCH. In short, in 3GPP Rel-15/16, overlapping PUCCH and PUSCH or A-CSI report can result in UCI multiplexing on PUSCH.

If an UL TB transmission spans multiple slots, the UL transmission may time-domain overlap HARQ-ACK and CSI report on the PUCCH. However, there are some remarkable drawbacks of UCI multiplexing on multi-slot PUSCH due to the small number of PRBs. Big UCI size may leave limited resources for PUSCH data in a slot, resulting in a higher code rate for the PUSCH. More methods can be used than multiplexing UCI on PUSCH to solve the overlapping problem.

Solutions to the problem of multi-slot PUSCH overlapping PUCCH are discussed, including multiplexing UCI on multi-slot PUSCH. A-CSI report on PUSCH doesn't belong to the problem but can use the solution of multiplexing UCI on multi-slot PUSCH. So multiplexing A-CSI on multi-slot PUSCH is also included.

**Embodiment 4:** for multiplexing UCI on PUSCH transmissions for multi-slot TB, one or more of the below-described configurations can be signaled in RRC/DCI from network to WD 22 or predetermined:
- Invalid symbol/slot for multi-slot TB
- preemption priority (similar to Rel-16 intra-UE prioritization) for UCI and multi-slot TB
- whether and which kind of UCI can be multiplexed on multi-slot TB.
   a) For example, UCI of HARQ-ACK only can be multiplexed on multi-slot TB, but UCI with CSI cannot. Which method to be used can be in part determined by UCI types. Different UCI types can use different methods.

Invalid symbol pattern has been supported for 3GPP NR Rel-16 PUSCH repetition type B and it can also be configured for multi-slot TB transmission.

**Embodiment 5:** the WD 22 is allowed to transmit UCI on one or more of the invalid symbols and/or slots for multi-slot TB, wherein the invalid one or more symbols/slots are regarded as unavailable symbols for multi-slot TB. If WD 22 is scheduled to transmit UCI on these symbols, there is no impact to multi-slot TB.

Physical layer priority index has been supported for 3GPP NR Rel-16 intra-WD 22 prioritization and it can be applied to multi-slot TB transmission according to a dynamic grant configuration or configured grant configuration. If UCI multiplexing on multi-slot TB is not allowed, UCI is still carried on PUCCH, then the higher-priority channel can preempt resources of the lower-priority channel. The preemption priority between time-overlapping UCI on PUCCH and multi-slot TB is used to solve the conflict. If it is not configured, physical layer priority can be reused.

**Embodiment 6:** if multi-slot PUSCH overlaps PUCCH, one or more methods can be RRC/DCI configured or predetermined.
- The WD 22 doesn't multiplex UCI on multi-slot PUSCH, namely UCI is still carried on PUCCH. The methods of Embodiment 1 above can be reused with one-slot PUSCH replaced with PUCCH.
- If the WD 22 multiplexes UCI on multi-slot PUSCH, one or more of below methods can be RRC/DCI configured or predetermined to use. Note: below methods can also be applied for multiplexing A-CSI on multi-slot PUSCH.
   a) Option 1. The UCI can be mapped to the slot of multiple slots of the TB, in which UCI is scheduled to be transmitted.
   b) Option 2. The WD 22 can postpone UCI and map it on next UL slot of the multi-slot TB.
   c) Option 3. The WD 22 sends UCI in more than one overlapping slots of the TB.
The first option can be used if timeline check passes for the slot when WD 22 is scheduled to transmit UCI, otherwise the second option is used. The third option may happen when PUSCH resources in one slot are not sufficient for UCI multiplexing otherwise PUSCH code rate would be too high. So the WD 22 searches for the subsequent slots of the TB, until resources in more than one slot of the TB, starting from the slot in which UCI is scheduled to be transmitted, are sufficient for UCI size and systematic bits of TBs in these slots. Then, the UCI is carried on these slots of the TB.

Embodiment 6 lists how UCI is multiplexed on one of multiple slots of a TB, no matter whether there is UL-SCH for multi-slot TBs. In reality, multi-slot TBs without UL-SCH may happen for a configured grant, or a dynamic grant when network has no BSR available. More methods can be applied if there is no UL-SCH for multi-slot TB

**Embodiment 7:** if there is no UL-SCH for multi-slot TB, WD 22 can be RRC/DCI configured or pre-determined to use below one or more methods.
- The WD 22 repeats UCI in all slots of the TB, starting from the slot in which UCI is scheduled to be transmitted.
- The WD 22 can be configured with X times of UCI transmission so that it repeats UCI on the multiple slots of the TB, starting from the slot in which UCI is scheduled to be transmitted until either X UCI transmissions are met or it is the last slot of the TB.

### Multi-slot PUSCH overlapping PUCCH repetition

**Embodiment 8:** if multi-slot PUSCH overlaps PUCCH repetition in one or more slots, one or more methods can be RRC/DCI configured or predetermined.
- One PUCCH repetition can be mapped on one of the overlapping slots of multi-slot TB; PUCCH repetition and/or multi-slot TB can be sent as scheduled in non-overlapping slots.
- If PUCCH repetition doesn't map on multi-slot PUSCH, methods in Embodiment 1 above can be reused.

### Repetition of multi-slot TB transmission

PUSCH repetition and multi-slot TB transmission are methods to improve PUSCH coverage. The two can be configured simultaneously for the same TB. For example, Type-A multi-slot TB can be configured with PUSCH repetition Type A; Type-B multi-slot TB can be configured with PUSCH repetition Type B.

In one embodiment, a multi-slot TB transmission is treated as one nominal repetition for both PUSCH repetition Type A and Type B.

In another embodiment, one or more of below combinations of multi-slot TB and PUSCH repetition can be applied.
- Type-A multi-slot TB, PUSCH repetition Type A
- Type-B multi-slot TB, PUSCH repetition Type B

In another embodiment, if repetition is used for multi-slot TBs, one or more methods can be RRC/DCI configured.
a) If one multi-slot TB uses only one RV, RV cycling can be applied among repetitions. For example, four repetitions of the multi-slot TB use RV0, RV2, RV1, RV3 respectively.
b) If a TB uses different RV for its multiple CB,
   i) RV cycling can be applied across all CB of the multi-slot TB repetitions.
   ii) RV cycling can be applied across all CB of one multi-slot TB repetition.
      (1) For the example of RV cycling of RV0, RV2, RV1, RV3 and a 3-slot TB with 2 repetitions. The above two methods have RV of 6 CB as below.
      (2) - RV0, RV2, RV1, RV3, RV0, RV2
      (3) - RV0, RV2, RV1, RV0, RV2, RV1

In another embodiment, when UCI overlaps repetition of the multi-slot TB, the UCI can be multiplexed in a particular repetition of the multi-slot TB, for example the first repetition, or the first repetition for which the timeline check passes. Or if either UCI or one or more repetitions of multi-slot TB is to be omitted/postponed, the methods in one or more of the embodiments above can be reused.

Some embodiments include methods to support multi-slot PUSCH repetition, UCI on multi-slot PUSCH and collision handling when multi-slot PUSCH overlaps with other channels while single TB transmission is applied on the multi-slot PUSCH. The methods enables robust multi-slot PUSCH transmission, quick UCI transmission on multi-slot PUSCH instead of waiting for another PUCCH opportunity or a rescheduled PUCCH, and prioritized PUSCH transmission when channel collision occurs.

According to one aspect, a network node 16 is configured to communicate with a wireless device (WD). The network node 16 includes a radio interface 62 and/or comprising processing circuitry 68 configured to configure the WD 22 to transmit on a multi-slot physical uplink shared channel (PUSCH) by overlapping a multi-slot PUSCH with at least one of another PUSCH and/or a physical uplink control channel (PUCCH) according to at least one of the following overlap cases:
(1) multi-slot PUSCH and multi-slot PUSCH;
(2) multi-slot PUSCH and one-slot PUSCH;
(3) multi-slot PUSCH and PUSCH repetition;
(4) multi-slot PUSCH and PUCCH in one slot; and
(5) multi-slot PUSCH and PUCCH repetition.

According to this aspect, in some embodiments, in at least one of the overlap cases, one-slot PUSCH or multi-slot TB is at least partially postponed. In some embodiments, in at least one of the overlap cases, one-slot PUSCH or multi-slot PUSCH is at least partially omitted.

According to another aspect, a method implemented in a network node 16 includes configuring a WD 22 to transmit on a multi-slot physical uplink shared channel (PUSCH) by overlapping a multi-slot PUSCH with at least one of another PUSCH and/or a physical uplink control channel (PUCCH) according to at least one of the following overlap cases:
(1) multi-slot PUSCH and multi-slot PUSCH;
(2) multi-slot PUSCH and one-slot PUSCH;
(3) multi-slot PUSCH and PUSCH repetition;
(4) multi-slot PUSCH and PUCCH in one slot; and
(5) multi-slot PUSCH and PUCCH repetition.

According to this aspect, in some embodiments, in at least one of the overlap cases, one-slot PUSCH or multi-slot TB is at least partially postponed. In some embodiments, at least one of the overlap cases, one-slot PUSCH or multi-slot PUSCH is at least partially omitted.

According to another aspect, a WD 22 is configured to communicate with a network node 16. The WD 22 includes a radio interface 82 and/or processing circuitry 84 configured to configure a multi-slot physical uplink shared channel (PUSCH) by overlapping a multi-slot PUSCH with at least one of another PUSCH and/or a physical uplink control channel (PUCCH).

According to this aspect, in some embodiments, the configuring is for at least one of the following overlap cases:
(1) multi-slot PUSCH and multi-slot PUSCH;
(2) multi-slot PUSCH and one-slot PUSCH;
(3) multi-slot PUSCH and PUSCH repetition;
(4) multi-slot PUSCH and PUCCH in one slot; and
(5) multi-slot PUSCH and PUCCH repetition.

In some embodiments, in at least one of the overlap cases, one-slot PUSCH or multi-slot TB is at least partially postponed. In some embodiments, in at least one of the overlap cases, one-slot PUSCH or multi-slot PUSCH is at least partially omitted. In some embodiments, the omitting and/or postponing is based at least in part on a priority of a channel.

According to yet another aspect, a method implemented in a wireless device (WD) 22 includes configuring a multi-slot physical uplink shared channel (PUSCH) by overlapping a multi-slot PUSCH with at least one of another PUSCH and/or a physical uplink control channel (PUCCH).

According to this aspect, in some embodiments, the configuring is for at least one of the following overlap cases:
(1) multi-slot PUSCH and multi-slot PUSCH;
(2) multi-slot PUSCH and one-slot PUSCH;
(3) multi-slot PUSCH and PUSCH repetition;
(4) multi-slot PUSCH and PUCCH in one slot; and
(5) multi-slot PUSCH and PUCCH repetition.

In some embodiments, in at least one of the overlap cases, one-slot PUSCH or multi-slot TB is at least partially postponed. In some embodiments, in at least one of the overlap cases, one-slot PUSCH or multi-slot PUSCH is at least partially omitted. In some embodiments, the omitting and/or postponing is based at least in part on a priority of a channel.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

Abbreviations that may be used in the preceding description include:

| Abbreviation | Explanation |
|---|---|
| BS | Base station |
| CB | Code Block |
| CBG | Code Block Group |
| CBGTI | Code Block Group Transmission Information |
| CG | Configured Grant |
| CRC | Cyclic Redundancy Check |
| CRM | Contention Resolution Message |
| CSI | Channel State Information |
| DCI | Downlink Control Information |
| DL | Downlink |
| DM-RS | Demodulation Reference Signal |
| eMTC | Enhanced Machine Type Communication |
| FH | Frequency Hopping |
| FR1 | Frequency Range |
| FR2 | Frequency Range 2 |
| gNB | Network Node in NR |
| HARQ | Hybrid Automated Retransmission Request |
| MAC | Medium Access Control |
| Msg3 | Message 3 |
| NB-IoT | Narrow-Band Internet of Things |
| NR | New Radio |
| PDCCH | Physical Downlink Control Channel |
| PUSCH | Physical Uplink Shared Data Channel |
| PRACH | Physical Random Access Channel |
| PRB | Physical Resource Block, i.e. 12 consecutive subcarriers |
| RACH | Random Access Channel |
| RE | Resource Element |
| RNTI | Radio Network Temporary Identifier |
| RSRP | Reference Signal Received Power |
| RV | Redundancy Version |
| TB | Transport Block |
| TXD | Transmit Diversity |
| UE | User Equipment |
| UL | Uplink |

It will be appreciated by persons skilled in the art that the embodiments described herein are not limited to what has been particularly shown and described herein above. In addition, unless mention was made above to the contrary, it should be noted that all of the accompanying drawings are not to scale.

## Claims

1. A method implemented in a network node (16a; 16b; 16c), the method comprising:
configuring a wireless device, WD (22a; 22b), to transmit repetitions of a multi-slot transport block, multi-slot TB, wherein a transport block size of a single TB is across multiple slots,
wherein one multi-slot TB among the repetitions uses only one redundancy version, RV, and wherein redundancy version cycling, RV cycling, is applied among the repetitions of the multi-slot TB.

2. The method of claim 1, wherein four repetitions of the multi-slot TB use redundancy versions RV0, RV2, RV1, RV3, respectively.

3. The method of any one of claims 1 to 2, wherein the configuring of the repetitions of the multi-slot TB comprises repetition Type A,
optionally wherein repetition Type A only allows a single repetition in each slot, with each repetition occupying the same symbols.

4. The method of any one of claims 1 to 3, wherein the configuring of the repetitions of the multi-slot TB comprises repetition Type B.

5. The method of any one of claims 1 to 4, wherein one transmission of the multi-slot TB is treated as one nominal repetition for both repetition Type A and repetition Type B.

6. The method of any one of claims 1 to 5, wherein the network node (16a; 16b; 16c) is configured to communicate with the WD (22A; 22B), and
wherein the configuring of the repetitions of the transmission of the multi-slot TB comprises transmitting a radio resource control, RRC, message or a downlink control information, DCI, message to the WD (22A; 22B).

7. The method of any one of claims 1 to 6, wherein the WD (22A; 22B) is further configured to transmit repetitions of a physical uplink shared channel, PUSCH.

8. The method of claim 7, wherein Type-A multi-slot TB and PUSCH repetition Type A are configured simultaneously.

9. The method of claim 7 or 8, wherein the PUSCH repetition and multi-slot TB transmission are configured simultaneously for the same TB.

10. A method implemented in a wireless device, WD (22a; 22b), the method comprising:
transmitting repetitions of a multi-slot transport block, multi-slot TB, wherein a transport block size of a single TB is across multiple slots,
wherein one multi-slot TB among the repetitions uses only one redundancy version, RV, and wherein redundancy version cycling, RV cycling, is applied among the repetitions of the multi-slot TB.

11. The method of claim 10, wherein four repetitions of the multi-slot TB use redundancy versions RV0, RV2, RV1, RV3, respectively.

12. The method of claim 10 or 11, wherein the repetitions of the multi-slot TB comprises repetition Type A, optionally wherein repetition Type A only allows a single repetition in each slot, with each repetition occupying the same symbols; or
wherein the configuring of the repetitions of the multi-slot TB comprises repetition Type B,
optionally wherein one transmission of the multi-slot TB is treated as one nominal repetition for both repetition Type A and repetition Type B.

13. The method of any one of claims 10 to 12, wherein the network node (16a; 16b; 16c) is configured to communicate with the WD (22A; 22B), and wherein the WD (22a; 22b) is configured for the transmitting of the repetitions of the multi-slot TB by receiving a radio resource control, RRC, message or a downlink control information, DCI, message from the network node (16a; 16b; 16c); and/or
wherein the WD (22A; 22B) is further configured to transmit repetitions of a physical uplink shared channel, PUSCH; and/or
wherein Type-A multi-slot TB and PUSCH repetition Type A are configured simultaneously; and/or
wherein the PUSCH repetition and multi-slot TB transmission are configured simultaneously for the same TB.

14. A network node (16a; 16b; 16c) configured to communicate with a wireless device, WD (22a; 22b), the network node (16a; 16b; 16c) being configured to:
configure a wireless device, WD (22a; 22b), to transmit repetitions of a multi-slot transport block, multi-slot TB, wherein a transport block size of a single TB is across multiple slots,
wherein one multi-slot TB among the repetitions uses only one redundancy version, RV, and wherein redundancy version cycling, RV cycling, is applied among the repetitions of the multi-slot TB.

15. The network node (16a; 16b; 16c) of claim14, further configured to perform the steps of any one of claims 2 to 9.

16. A wireless device, WD (22a; 22b), configured to communicate with a network node (16a; 16b; 16c), the WD (22a; 22b) being configured to:
transmit repetitions of a multi-slot transport block, multi-slot TB, wherein a transport block size of a single TB is across multiple slots,
wherein one multi-slot TB among the repetitions uses only one redundancy version, RV, and wherein redundancy version cycling, RV cycling, is applied among the repetitions of the multi-slot TB.

17. The WD (22a; 22b) of claim 16, further configured to perform the steps of any one of claims 11 to 13.

## Patentansprüche

1. Verfahren, das in einem Netzwerkknoten (16a; 16b; 16c) implementiert wird, wobei das Verfahren Folgendes umfasst:
Konfigurieren einer drahtlosen Vorrichtung, WD (22a; 22b), um Wiederholungen eines Mehrschlitz-Transportblocks, Mehrschlitz-TB, zu senden, wobei eine Transportblockgröße eines einzelnen TB über mehrere Schlitze ist,
wobei ein Mehrschlitz-TB unter den Wiederholungen nur eine Redundanzversion, RV, verwendet und wobei Redundanzversionszyklisierung, RV-Zyklisierung, unter den Wiederholungen des Mehrschlitz-TB angewendet wird.

2. Verfahren nach Anspruch 1, wobei vier Wiederholungen des Mehrschlitz-TB die Redundanzversionen RV0, RV2, RV1 bzw. RV3 verwenden.

3. Verfahren nach einem der Ansprüche 1 bis 2, wobei das Konfigurieren der Wiederholungen des Mehrschlitz-TB Wiederholungstyp A umfasst,
wobei optional der Wiederholungstyp A nur eine einzige Wiederholung in jedem Schlitz ermöglicht, wobei jede Wiederholung dieselben Symbole belegt.

4. Verfahren nach einem der Ansprüche 1 bis 3, wobei das Konfigurieren der Wiederholungen des Mehrschlitz-TB Wiederholungstyp B umfasst.

5. Verfahren nach einem der Ansprüche 1 bis 4, wobei eine Übertragung des Mehrschlitz-TB sowohl für Wiederholungstyp A als auch für Wiederholungstyp B als eine nominelle Wiederholung behandelt wird.

6. Verfahren nach einem der Ansprüche 1 bis 5, wobei der Netzwerkknoten (16a; 16b; 16c) zum Kommunizieren mit der WD (22A; 22B) konfiguriert ist, und
wobei das Konfigurieren der Wiederholungen der Übertragung des Mehrschlitz-TB Senden einer Funkressourcensteuerungsnachricht, RRC-Nachricht, oder einer Downlink-Steuerinformationsnachricht, DCI-Nachricht, an die WD (22A; 22B) umfasst.

7. Verfahren nach einem der Ansprüche 1 bis 6, wobei die WD (22A; 22B) ferner zum Senden von Wiederholungen eines gemeinsamen physikalischen Uplink-Kanals, PUSCH, konfiguriert wird.

8. Verfahren nach Anspruch 7, wobei ein Mehrschlitz TB vom Typ A und ein PUSCH-Wiederholungstyp A gleichzeitig konfiguriert werden.

9. Verfahren nach Anspruch 7 oder 8, wobei die PUSCH-Wiederholung und die Mehrschlitz-TB-Übertragung für denselben TB gleichzeitig konfiguriert werden.

10. Verfahren, das in einer drahtlosen Vorrichtung, WD, (22a; 22b) implementiert wird, wobei das Verfahren Folgendes umfasst:
Senden von Wiederholungen eines Mehrschlitz-Transportblocks, Mehrschlitz-TB, wobei eine Transportblockgröße eines einzelnen TB über mehrere Schlitze ist,
wobei ein Mehrschlitz-TB unter den Wiederholungen nur eine Redundanzversion, RV, verwendet und wobei Redundanzversionszyklisierung, RV-Zyklisierung, unter den Wiederholungen des Mehrschlitz-TB angewendet wird.

11. Verfahren nach Anspruch 10, wobei vier Wiederholungen des Mehrschlitz-TB die Redundanzversionen RV0, RV2, RV1 bzw. RV3, verwenden.

12. Verfahren nach Anspruch 10 oder 11, wobei die Wiederholungen des Mehrschlitz-TB den Wiederholungstyp A umfassen, wobei optional der Wiederholungstyp A nur einen einzige Wiederholung in jedem Schlitz ermöglicht, wobei jede Wiederholung dieselben Symbole belegt; oder
wobei das Konfigurieren der Wiederholungen des Mehrschlitz-TB Wiederholungstyp B umfasst,
wobei optional eine Übertragung des Mehrschlitz-TB sowohl für Wiederholungstyp A als auch für Wiederholungstyp B als eine nominelle Wiederholung behandelt wird.

13. Verfahren nach einem der Ansprüche 10 bis 12, wobei der Netzwerkknoten (16a; 16b; 16c) zum Kommunizieren mit der WD (22A; 22B) konfiguriert ist, und wobei die WD (22a; 22b) zum Senden der Wiederholungen des Mehrschlitz-TB durch Empfangen einer Funkressourcensteuerungsnachricht, RRC-Nachricht, oder einer Downlink-Steuerinformationsnachricht, DCI-Nachricht, vom Netzwerkknoten (16a; 16b; 16c) konfiguriert wird; und/oder
wobei die WD (22A; 22B) ferner zum Senden von Wiederholungen eines gemeinsamen physikalischen Uplink-Kanals, PUSCH, konfiguriert wird; und/oder
wobei ein Mehrschlitz TB vom Typ A und ein PUSCH-Wiederholungstyp A gleichzeitig konfiguriert werden; und/oder
wobei die PUSCH-Wiederholung und die Mehrschlitz-TB-Übertragung für denselben TB gleichzeitig konfiguriert werden.

14. Netzwerkknoten (16a; 16b; 16c), der zum Kommunizieren mit einer drahtlosen Vorrichtung, WD, (22a; 22b) konfiguriert ist, wobei der Netzwerkknoten (16a; 16b; 16c) zu Folgendem konfiguriert ist:
Konfigurieren einer drahtlosen Vorrichtung, WD (22a; 22b), um Wiederholungen eines Mehrschlitz-Transportblocks, Mehrschlitz-TB, zu senden, wobei eine Transportblockgröße eines einzelnen TB über mehrere Schlitze ist,
wobei ein Mehrschlitz-TB unter den Wiederholungen nur eine Redundanzversion, RV, verwendet und wobei Redundanzversionszyklisierung, RV-Zyklisierung, unter den Wiederholungen des Mehrschlitz-TB angewendet wird.

15. Netzwerkknoten (16a; 16b; 16c) nach Anspruch 14, ferner konfiguriert zum Ausführen der Schritte nach einem der Ansprüche 2 bis 9.

16. Drahtlose Vorrichtung, WD, (22a; 22b), die zum Kommunizieren mit einem Netzwerkknoten (16a; 16b; 16c) konfiguriert ist, wobei die WD (22a; 22b) zu Folgendem konfiguriert ist zum:
Senden von Wiederholungen eines Mehrschlitz-Transportblocks, Mehrschlitz-TB, wobei eine Transportblockgröße eines einzelnen TB über mehrere Schlitze ist,
wobei ein Mehrschlitz-TB unter den Wiederholungen nur eine Redundanzversion, RV, verwendet und wobei Redundanzversionszyklisierung, RV-Zyklisierung, unter den Wiederholungen des Mehrschlitz-TB angewendet wird.

17. WD (22a; 22b) nach Anspruch 16, ferner konfiguriert zum Ausführen der Schritte nach einem der Ansprüche 11 bis 13.

## Revendications

1. Procédé mis en œuvre dans un nœud de réseau (16a ; 16b ; 16c), le procédé comprenant :
la configuration d'un dispositif sans fil, WD (22a ; 22b), pour transmettre des répétitions d'un bloc de transport multi-créneaux, TB multi-créneaux, dans lequel une taille de bloc de transport d'un TB unique couvre de multiples créneaux,
dans lequel un TB multi-créneaux parmi les répétitions utilise une seule version de redondance, RV, et dans lequel un cyclage de version de redondance, cyclage RV, est appliqué parmi les répétitions du TB multi-créneaux.

2. Procédé selon la revendication 1, dans lequel quatre répétitions du TB multi-créneaux utilisent respectivement des versions de redondance RV0, RV2, RV1, RV3.

3. Procédé selon l'une quelconque des revendications 1 et 2, dans lequel la configuration des répétitions du TB multi-créneaux comprend une répétition de Type A,
facultativement dans lequel une répétition de Type A ne permet qu'une seule répétition dans chaque créneau, chaque répétition occupant les mêmes symboles.

4. Procédé selon l'une quelconque des revendications 1 à 3, dans lequel la configuration des répétitions du TB multi-créneaux comprend une répétition de Type B.

5. Procédé selon l'une quelconque des revendications 1 à 4, dans lequel une transmission du TB multi-créneaux est traitée comme une répétition nominale pour à la fois une répétition de Type A et une répétition de Type B.

6. Procédé selon l'une quelconque des revendications 1 à 5, dans lequel le nœud de réseau (16a ; 16b ; 16c) est configuré pour communiquer avec le WD (22A ; 22B), et
dans lequel la configuration des répétitions de la transmission du TB multi-créneaux comprend la transmission d'un message de commande de ressources radio, RRC, ou d'un message d'informations de commande de liaison descendante, DCI, au WD (22A ; 22B).

7. Procédé selon l'une quelconque des revendications 1 à 6, dans lequel le WD (22A ; 22B) est en outre configuré pour transmettre des répétitions d'un canal partagé de liaison montante physique, PUSCH.

8. Procédé selon la revendication 7, dans lequel un TB multi-créneaux de Type A et une répétition de PUSCH de Type A sont configurés simultanément.

9. Procédé selon la revendication 7 ou 8, dans lequel la répétition de PUSCH et la transmission de TB multi-créneaux sont configurées simultanément pour le même TB.

10. Procédé mis en œuvre dans un dispositif sans fil, WD (22a ; 22b), le procédé comprenant :
la transmission de répétitions d'un bloc de transport multi-créneaux, TB multi-créneaux, dans lequel une taille de bloc de transport d'un TB unique couvre de multiples créneaux,
dans lequel un TB multi-créneaux parmi les répétitions utilise une seule version de redondance, RV, et dans lequel un cyclage de version de redondance, cyclage RV, est appliqué parmi les répétitions du TB multi-créneaux.

11. Procédé selon la revendication 10, dans lequel quatre répétitions du TB multi-créneaux utilisent respectivement des versions de redondance RV0, RV2, RV1, RV3.

12. Procédé selon la revendication 10 ou 11, dans lequel les répétitions du TB multi-créneaux comprennent une répétition de Type A, facultativement dans lequel une répétition de Type A ne permet qu'une seule répétition dans chaque créneau, chaque répétition occupant les mêmes symboles ; ou
dans lequel la configuration des répétitions du TB multi-créneaux comprend une répétition de Type B,
facultativement dans lequel une transmission du TB multi-créneaux est traitée comme une répétition nominale pour à la fois une répétition de Type A et une répétition de Type B.

13. Procédé selon l'une quelconque des revendications 10 à 12, dans lequel le nœud de réseau (16a ; 16b ; 16c) est configuré pour communiquer avec le WD (22A ; 22B), et dans lequel le WD (22a ; 22b) est configuré pour la transmission des répétitions du TB multi-créneaux par la réception d'un message de commande de ressources radio, RRC, ou d'un message d'informations de commande de liaison descendante, DCI, depuis le nœud de réseau (16a ; 16b ; 16c) ; et/ou
dans lequel le WD (22A ; 22B) est en outre configuré pour transmettre des répétitions d'un canal partagé de liaison montante physique, PUSCH ; et/ou
dans lequel un TB multi-créneaux de Type A et une répétition de PUSCH de Type A sont configurés simultanément ; et/ou
dans lequel la répétition de PUSCH et la transmission de TB multi-créneaux sont configurées simultanément pour le même TB.

14. Nœud de réseau (16a ; 16b ; 16c) configuré pour communiquer avec un dispositif sans fil, WD (22a ; 22b), le nœud de réseau (16a ; 16b ; 16c) étant configuré pour :
configurer un dispositif sans fil, WD (22a ; 22b), pour transmettre des répétitions d'un bloc de transport multi-créneaux, TB multi-créneaux, dans lequel une taille de bloc de transport d'un TB unique couvre de multiples créneaux,
dans lequel un TB multi-créneaux parmi les répétitions utilise une seule version de redondance, RV, et dans lequel un cyclage de version de redondance, cyclage RV, est appliqué parmi les répétitions du TB multi-créneaux.

15. Nœud de réseau (16a ; 16b ; 16c) selon la revendication 14, configuré en outre pour réaliser les étapes selon l'une quelconque des revendications 2 à 9.

16. Dispositif sans fil, WD (22a ; 22b), configuré pour communiquer avec un nœud de réseau (16a ; 16b ; 16c), le WD (22a ; 22b) étant configuré pour :
transmettre des répétitions d'un bloc de transport multi-créneaux, TB multi-créneaux, dans lequel une taille de bloc de transport d'un TB unique couvre de multiples créneaux,
dans lequel un TB multi-créneaux parmi les répétitions utilise une seule version de redondance, RV, et dans lequel un cyclage de version de redondance, cyclage RV, est appliqué parmi les répétitions du TB multi-créneaux.

17. WD (22a ; 22b) selon la revendication 16, configuré en outre pour réaliser les étapes selon l'une quelconque des revendications 11 à 13.
